# EUROPEAN PATENT SPECIFICATION

(11) **EP 1 983 408 B1**
(45) Date of publication and mention of the grant of the patent: **02.07.2014**
(21) Application number: 08154743.2
(22) Date of filing: 17.04.2008
(51) Int. Cl.: G06F 3/033, G06F 3/046, G06F 3/0354

(54) **Position indicator and coordinate input device**
Positionsanzeiger und Koordinateneingabevorrichtung
Indicateur de position et dispositif d'entrée coordonnée

(30) Priority: 19.04.2007 JP 2007110710
(43) Date of publication of application: 22.10.2008
(73) Proprietor: Wacom Co., Ltd., Saitama 349-1148 (JP)
(72) Inventor: Katsurahira, Yuji, Kazo-city, Saitama 347-0016 (JP)
(74) Representative: Richardt Patentanwälte PartG mbB

(56) References cited:
- EP-A1- 0 727 756
- JP-A- 61 139 820
- US-A- 5 414 227
- US-A- 5 699 084
- US-A- 5 898 427
- US-A- 5 977 959
- US-A1- 2003 122 795

## Description

### Background of the Invention

### Field of the Invention:

The invention relates to a position indicator capable of detecting pen-pressure and a coordinate input device utilizing the position indicator.

### Description of the Related Art:

In recent years, personal computers have increasingly been utilizing coordinates input devices as input devices. Such a coordinate input device is configured to include a pen-shaped position indicator and a position detector having an input plane via which the user can operate the position indicator to input characters or drawings by pointing it on the coordinate input device. The position indicator configured in this manner and utilized for the coordinate input device includes a detecting unit detecting pressing force or pen-pressure against the input plane of the position detector when the user operates the position indicator on the coordinate input device.

An example of the position indicator is disclosed in Japanese Unexamined Patent Application Publication No. H04-96212. This publication discloses a variable capacitor the capacitance value of which varies in compliance with the pressure applied from outside, and a position indicator utilizing the variable capacitor. The publication discloses "a variable capacitor including a dielectric, a first electrode attached on one surface of the dielectric, a second flexible electrode placed on the other surface of the dielectric, a spacing unit providing a little space excluding one area between the second electrode and the other surface of the dielectric, and a pressure or displacement applying unit applying a relative pressure or displacement between the second electrode and the dielectric". Further, according to this publication, "a position indicator including a tuning circuit having the variable capacitor as part of a circuit element".

The position indicator having the configuration disclosed in the publication "changes an initial tuning frequency of the tuning circuit according to the operation, continuously changes the tuning frequency, and transmits information on ON or OFF status of a switch to a tablet with subsequent operational information".

Another example of the position indicator Is disclosed In Japanese Unexamined Patent Application Publication No. H08-227336. The disclosed position indicator of the publication is a stylus pen capable of detecting pen-pressure, that is, a stylus pen having a pressure sensitive mechanism. The stylus pen of the disclosed publication including a stylus pen having a pen casing with an approximately cylindrical shape, a resonant circuit, and a pressure sensitive mechanism sensing the pen-pressure using a change in inductance generated by displacing a distance due to pen-pressure between a first magnetic body and a second magnetic body having a coil wound thereabout, the stylus pen including: a pressing member having a contact unit receiving the pen-pressure and a rear end plane located approximately opposite to the contact unit, the rear end plane of the pressing member forming a magnetic body; a second magnetic body having a coil wound thereabout disposed such that a front end plane thereof is located a predetermined distance from the rear end plane of the pressing member; an elastic material member arranged disposed between the rear end plane of the pressing member and the front end plane of the second magnetic body; a first supporting unit provided so as to hold the position of the second magnetic body against the pen-pressure applied via the pressing member and the elastic material member; anda second supporting unit supporting the pressing member in non-parallel state when the rear end plane of the first magnetic body and the front end plane of the second magnetic body are not in parallel.

The stylus pen having the configuration of the disclosed publication "can responsively detect the pen-pressure when a user operates pen-down operation with a styl us pen while holding the stylus pen with inclination" (see paragraph [0066]).

US 5 977 959 A discloses a pen shaped position pointing device used In a position detecting apparatus, comprising a housing having an axis and a pen-tip segment at one end, the pen-tip segment of the housing having a working tip, the working tip being integral with the housing and a side pressure detecting means at the pen-tip segment for detecting pressure on the working tip in a first direction perpendicular to the axis.

JP 61 139820 A relates to a device for detecting a pen pressure information by two exciting coils, wherein upon a bending of the pen tip, different angles of the exciting coils can be electronically detected.

US 5 414 227 A discloses an architecture for improved tilt detection for a radiative pickup stylus. The architecture includes a contact sensing mechanism and a coaxial conductor assembly which provides both position measurement and tilt sensing measurement features. By using the contact sensor to establish a calibration for the position and tilt detection elements, an improved, highly accurate position and tilt sensing capability is provided for radiative pickup stylus for a digitizing display.

US 5 898 427 A relates to a pen for providing input to an electronic apparatus including a cylindrical pen body made of a resin, a pen tip attached to one end of the pen body, and a weight member disposed within the pen body and offset from the axis of the pen body. The weight member is of a density higher than that of the rein. This allows the center of gravity of the pen body to be radially eccentric with respect to the axis thereof and aids in preventing rolling of the pen

US 2003/122795 A1 relates to an Input pen having a pen-shaped casing, a ferrite core with a coil wound thereon and a ferrite chip are placed opposed to each other with an O-ring there between. The ferrite chip has a projection. When the input pen is operated, the projection and the ferrite core are moved closer together. When the ferrite chip is moved closer to the ferrite core during operation, the projection is placed substantially close to the ferrite core. Therefore, high responsivity Is ensured without moving the ferrite chip into the coil, and there is no need to form an opening or a cavity In the ferrite core.

US 5 699 084 A relates to a computer system which allows a particular position pointing device to be used only with a particular software program. The computer system is provided with an identifying information generating means which issues identifying information telling a particular position pointing device that it is a position pointing device matched to a particular software program.

The invention therefore aims to provide an alternative position indicator and an alternative coordinate Input device.

### Summary of the Invention

The invention provides a position indicator and a coordinate input device as claimed in the independent claims. Embodiments of the invention are claimed in the dependent claims.

In general, a user uses writing tools such as pencils or brushes for calligraphy by having the tools largely inclined in writing with the side surface of lead or brush. Specifically, the user writes with the pen or brush in this manner to control the pressure applied thereto to express a subtle change in the thickness or density distribution of written lines. Embodiments of the invention provide a coordinate input device to simulate the aforementioned writing manner.

In contrast to the invention, the position indicator disclosed in the Japanese Unexamined Patent Application Publication No. H04-96212 includes a pressing unit that presses the variable capacitor only moves in the axial direction thereof. Consequently, when the user operates the disclosed position indicator with being inclined to an input plane of a tablet (position detector), the pen-pressure may not be detected by the tablet (position detector).

When the position indicator disclosed in the Japanese Unexamined Patent Application Publication No. H04-96212 is allowed to intersect with the input plane of the position detector at right angles, the external force or the pen-pressure is applied in the axial direction of the pressing unit of the position indicator, and hence an accurate pen-pressure can be detected based on the displacement of the pressing unit. However, when the disclosed position indicator is operated with being inclined to the input plane of the position detector, and the external force or the pen-pressure is applied in the lateral direction of the pressing unit of the position indicator, the pressing unit of the position indicator is unmoved in the axial direction, and hence an accurate pen-pressure may not be detected.

In the stylus pen disclosed in Japanese Unexamined Patent Application Publication No. H08-227336, the pen-pressure is detected by causing the first magnetic body to approach the second magnetic body to obtain a change in inductance of the coil wound around the second magnetic body. Subsequently, in operating the stylus pen with being inclined to the position detecting plane, when the pen-pressure is applied to the pressing member having the first magnetic body, the pressing member is inclined with being supported by the second supporting member, thereby causing one side of the first magnetic body to approach the second magnetic body.

In this case, the pressing member is pushed so that at least the other surface of the first magnetic body is not separated from the second magnetic body. However, if the pen-pressure is applied to the pressing member in the lateral direction, the pressing member is not sufficiently pushed, and thus an accurate pen-pressure may not be detected.

Embodiments of the invention provide a position indicator and a coordinate input device that can detect an external force with high accuracy even though the external force is applied to an indicating unit in the lateral direction when the indicating unit is inclined to the input plane of the position detector.

A position indicator according to an embodiment of the invention includes an enclosure formed as an external unit, a movable member, such as a core, having an indicating unit projecting outside of the enclosure and movably supported by the enclosure, a guide unit including an inclined plane formed on one of the enclosure and the core, and an engaging unit provided on the other and slidably engaged with the inclined plane such that the guide unit guides movement of the core when external force is applied to the indicating unit of the core in a lateral direction, and a pressure detector detecting pressure applied from the core that is guided and moved by the guide unit. The movable member has an elongated form and extends along a length axis of the enclosure.

In addition, a coordinate input device according to an embodiment of the invention includes a position detector having an input plane, a position indicator capable of indicating a position on the input plane and detecting pressing force thereto, and including an enclosure formed as an external unit, a core having an indicating unit projecting outside of the enclosure and movably supported by the enclosure, a guide unit including an inclined plane formed on one of the enclosure and the core, and an engaging unit provided on the other and slidably engaged with the inclined plane such that the guide unit guides movement of the core when external force is applied to the indicating unit of the core in a lateral direction, and a pressure detector detecting pressure applied from the core that is guided and moved by the guide unit.

The embodiments of the invention can provide a position indicator and a coordinate input device that can detect an external force with high accuracy even though the external force is applied to the indicating unit in the lateral direction when being inclined to the input plane of the position detector.

### Brief description of the Drawings

In the following embodiments of the invention are described by way of example only making reference to the drawings in which:
- FIG. 1: is a sectional view illustrating a position indicator according to a first embodiment of the invention.
- FIG. 2: is a circuit diagram for the position indicator according to the first embodiment of the invention.
- FIG. 3: is a waveform diagram illustrating operations of the position indicator according to the first embodiment of the invention.
- FIGS. 4A, 4B: are each illustrating a manner in which the position indicator according to the first embodiment of the invention is inclined in operation. FIG. 4A is a diagram illustrating a manner when the position indicator according to the first embodiment of the invention is operated by inclining it on an input plane of a position detector, and FIG. 4B is a diagram illustrating a manner when an indicating unit 31 of the inclined position indicator of FIG. 4A is pressed on the input plane of the position detector.
- FIG. 5: is a sectional view illustrating a position indicator according to a second embodiment of the invention.
- FIG. 6: is a diagram illustrating a position indicator according to a third embodiment of the invention.
- FIG. 7: is a diagram illustrating a guiding unit utilized for the position indicator in FIG. 6 in which A part of FIG. 6 is exploded.
- FIG. 8: is a perspective view illustrating a coordinate input device according to a first embodiment of the invention.
- FIG. 9: is a block diagram illustrating a configuration of the position detector utilized with the position indicator of the embodiment of the invention.

### Description of the Preferred Embodiments

The position indicator and a coordinate input device according to preferred embodiments of the invention will now be described in detail with reference to accompanying drawings.

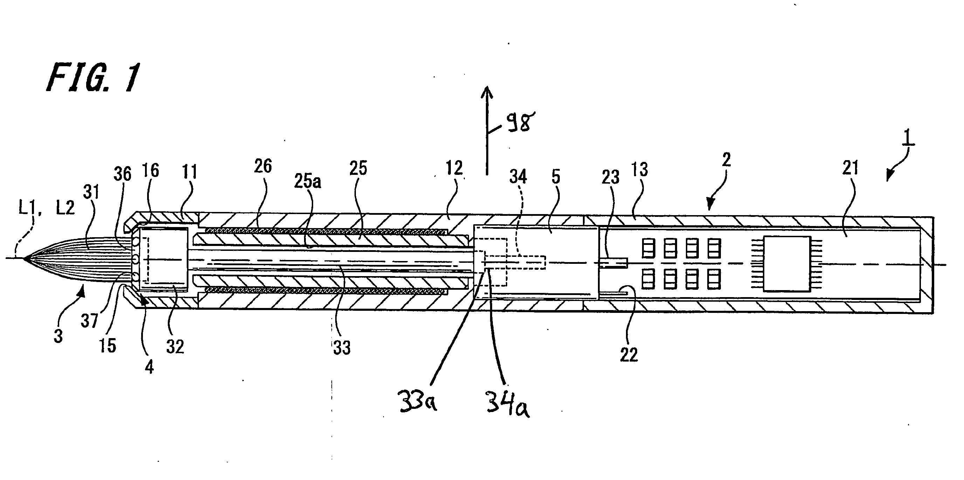

The position indicator according to the first embodiment shown in FIGS. 1 to 4 is configured to indicate positions to the later-described position detector via electromagnetic induction. Specifically, a position indicator 1 includes a resonant circuit configured to resonate with an electromagnetic wave having a specific frequency transmitted from the position detector, and transmit a resonance signal, thereby indicating positions to the position detector.

As shown in FIG. 1, the indicator 1 includes a case 2 illustrating one specific example of an enclosure that forms an exterior component, a core 3 having an indicating unit 31 that is movably supported in the case 2 and projects outside of the case 2, a guiding unit 4 that guides a movement of the core 3 when external force is laterally applied to the indicating unit 31 of the core 3, and a variable capacitance 5 illustrating one specific example of a pressure detector that detects the pressure when being pressed by the core 3 guided by the guiding unit 4.

The case 2 of the position indicator 1 is a cylindrical body one end of which is closed. The case 2 includes a front-end case 11, a middle case 12, and a rear-end case 13, all of which are mutually stacked in an axial direction as one unit. The front-end case 11 has an opening 15 on the opposite side of the middle case 12. A case side conical plane 16 is provided with an internal surface of the front-end case 11 that illustrates a first specific example of an inclined plane forming part of the guiding unit 4.

This case side conical plane 16 is continuously formed from the opening 15, and is formed with an inclination so that an internal space of the front-end case 11 is gradually enlarged. According to the embodiment, an inclination angle of the case side conical plane 16 is 45 degrees to the central axis L1 of the case 2. Note that the core 3 of the position indicator 1 is located to match with the central axis L2 when not in operation. A spherical projection 37 of the later-described core 3 is slidably engaged with the case side conical plane 16. The case side conical plane 16 is mirror-finished so as to decrease the friction resistance between the case side conical plane 16 and the spherical projection 37.

A polyacetal resin (POM) having a small friction coefficient and exhibiting excellent slidability is employed as a material for the front-end case 11 having the case side conical plane 16. Further, other synthetic resins, such as a polycarbonate (PC) and an acrylonitrile butadiene styrene resin (ABS)can also be employed as the material for the front-end case 11 having the case side conical plane 16 according to the embodiment of the invention. An inclined plane forming part of the guiding unit 4 is configure to correspond to the conical plane 16 in the embodiment; however, a pyramidal plane may also be configured to correspond to the conical plane 16.

A printed circuit board 21 provided with the later-described electronic components is fixed on the rear-end case 13 with fixation medium, such as adhesive or fixation screws. The middle case 12 includes the variable capacitor 5 fixed thereto at the rear-end case 12 side, and also includes a ferrite core fixed thereto at the front-end case 11 side.

The variable capacitor 5 can vary the capacitance value according to the pressure applied thereto, and placed to face the later-described pressing unit 34 of the core 3 with a little space between the variable capacitor 5 and the pressing unit 34 when the position indicator is not in operation. The distance between the variable capacitor 5 and the pressing unit 34 is approximately 0.1 mm according to the embodiment of the invention. The variable capacitor 5 includes two terminals 22, 23 that are connected to the printed circuit board 21. Components of the printed circuit board 21 are electrically coupled with the variable capacitor 5 via the terminals 22, 23.

The ferrite core 25 is formed of a cylindrical body; through a cylindrical bore 25a of which a shaft 33 of the core 3 is passed. A coil 26 is wound around the circumference of the ferrite core 25. Both ends, not shown, of the coil 26 electrically coupled with the components via the printed circuit board 21.

The core 3 is formed of an elongate member having the central axis L2, and is configured to include an indicating unit 31 as a pen point, a supporting unit 32 supporting the indicating unit 31, the shaft 33 located successively to the supporting unit 32 and a pressing unit 34 located successively to the shaft 33. The indicating unit 31 of the core 3 is externally projected through the opening 15 of the case 2.

The indicating unit 31 is formed in a shape of a calligraphy-brush and is made up from a combination of extra-fine nylon fiber and synthetic elastomer resin. The user can input characters or graphics by operating the position indicator while having a feel of wiring with the calligraphy-brush. An example of the position indicator 31 may include an FX type of the nylon fiber nibs manufactured by AuBEX Corp.

The supporting unit 32 of the core 3 is housed in the front-end case 11. The supporting unit 32 is formed in an approximately cylindrical shape, and a core side conical plane 36 is formed at the position indicator 31 side. According to the embodiment, the core side conical plane 36 is formed such that inclination angle thereof is 45 degrees to the central axis L1 of the core 3. The core side conical plane 36 includes spherical projections 37 each illustrating a first specific example of an engaging unit forming part of the guiding unit 4.

The eight spherical projections 37 are arranged at equal intervals along the core side conical plane 36, and are in point contact with a case side conical plane 16 when the position indicator 1 is not in operation. The surface of the eight spherical projections 37 are mirror-finished so as to decrease the friction resistance between the case side conical plane 16 of the front-end case 11 and the spherical projections 37.

A polyacetal resin (POM) having a small friction coefficient and exhibiting excellent slidability is employed as a material for the supporting unit 32 having the eight spherical projections 37, as also employed in the front-end case 11. However, other synthetic resins, such as a polycarbonate (PC) and an acrylonitrile butadiene styrene resin (ABS) can also be employed as the material for the supporting unit 32 having spherical projections 37 according to the embodiment of the invention.

The pressing unit 34 and shaft 33 of the core 3 is housed in the middle case 12. The shaft 33 is formed of a cylindrical body having a diameter smaller than that of the supporting unit 32, and passes through the cylindrical bore 25a of the ferrite core 25 fixed on the middle case 12. The pressing unit 34 is formed of a cylindrical body having a diameter smaller than that of the shaft 33, and faces the variable capacitor 5 having a little space of approximately 0.1 mm therebetween in this embodiment.

The core 3 having this configuration is constantly impelled by an impelling unit, not shown, in a direction of the opening 15 side of the case 2 so as to be movably and relatively supported to the case 2. The core 3 is moved in the direction of the variable capacitor 5 against the biasing force generated by the impelling unit, so that the variable capacitor 5 is pressed by the pressing unit 34 of the core 3. The impelling unit can be realized by a spring or another elastic element that exercises the biasing force in order to press the core 3 against the guiding unit 4.

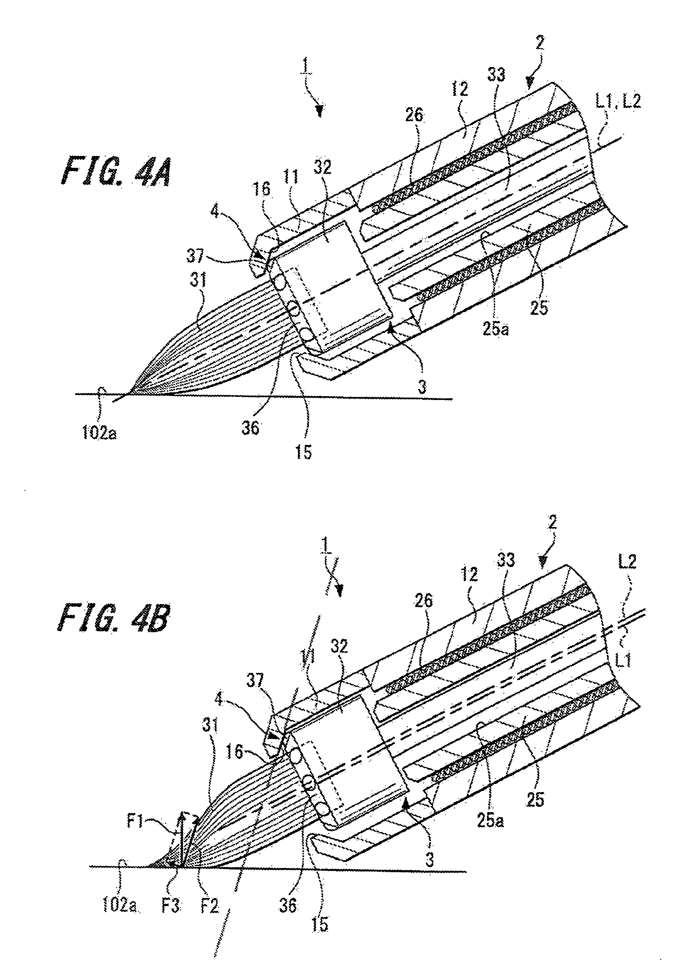

The shaft 33 has an end portion 33a and the pressing unit has an end portion 34a. The end portion 33a and the end portion 34a are opposing such that the end portion 34a forms an abutment for the end portion 33a. The end portion 34a is fixed relative to the case 2 whereas the end portion 33a is slidably displaceable in a direction 98 that is perpendicular to the central axis L1. This allows the end portion 33a to be slightly displaced with respect to the end portion 34a into the direction 98 when the position indicator 1 is depressed with an inclination angle as shown in Fig. 4B.

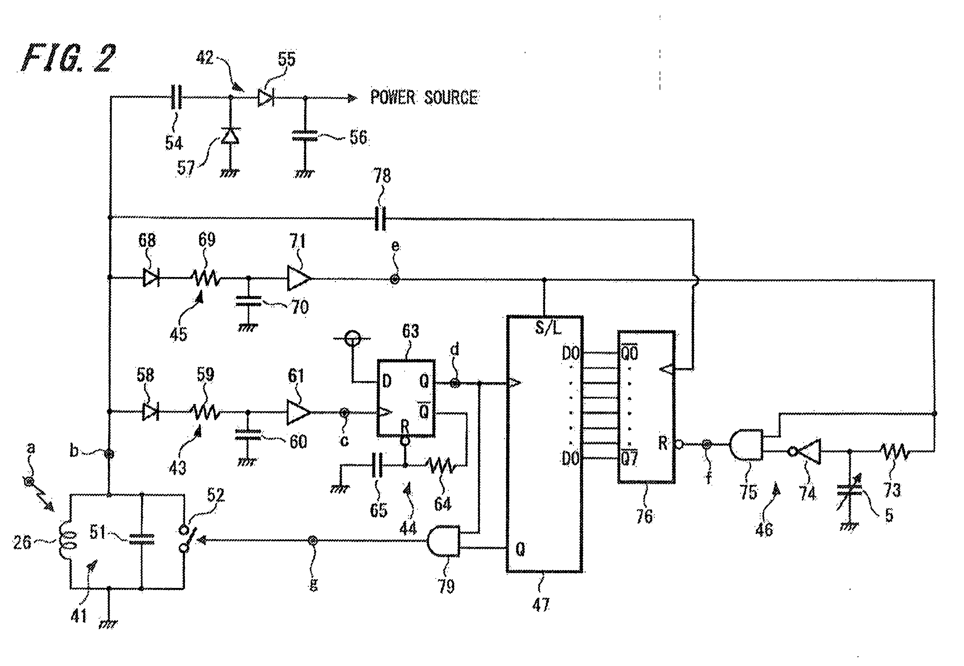

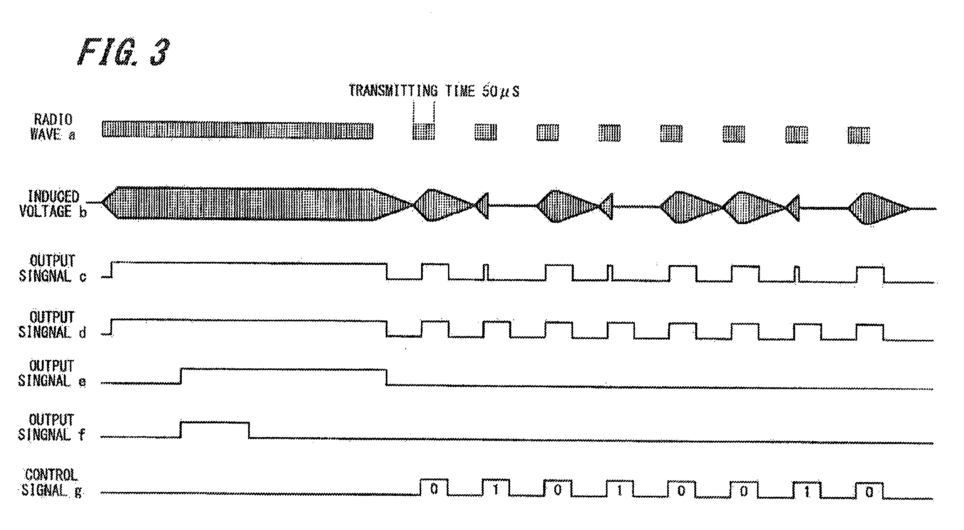

FIG. 2 illustrates one example of an electric circuit configuration of the position indicator 1, and FIG. 3 depicts waveform obtained at each part of the circuit diagram indicated by a to g in FIG. 2. In FIG. 2, components other than the variable capacitor 5 and a coil 26 are mounted on the printed circuit board 21 in FIG. 1 as electric components. In this circuit, the pressure value (pen-pressure) applied to the variable capacitor 5 is converted into 8 bit-digital value and is returned the converted value to the position detector.

The position indicator 1 includes a resonant circuit 41, a power source circuit 42, a first detecting circuit 43, a one-shot mono/multi circuit 44, a second detecting circuit 45, pen-pressure detecting circuit 46, and a parallel-to-serial converting circuit 47.

The resonant circuit 41 includes the coil 26 and a capacitor 51. The resonant circuit 41 resonates with a frequency of the radio wave a supplied from the position detector to generate induced voltage b. The resonant circuit 41 is connected with a switch 52. The switch 52 is supplied with the later-described control signal g to control resonance of the resonant circuit. The resonant circuit 41 is connected with the power source circuit 42, and also with the first and second detecting circuits 43, 45.

The power source circuit 42 includes a capacitor 54 extracting power source from the induced voltage b generated by the resonant circuit 41, diodes 55, 57 a capacitor 56 utilized as an accumulator. The voltage accumulated in the capacitor 56 is supplied to the circuits such as the first detecting circuit as power source.

The first detecting circuit 43 is connected with the one-shot mono/multi circuit 44 outputting an output signal c. The first detecting circuit 43 includes a diode 58, a resistor 59, a capacitor 60, and a buffer amplifier 61. The first detecting circuit 43 includes an integrating circuit having the resistor 59 and the capacitor 60. In the integrating circuit, the time constant is configured such that the first detecting circuit 43 outputs the output signal c if the continuing transmitting time for the radio wave a supplied from the position indicator exceeds a first predetermined time of 50 µ seconds in this embodiment.

The one-shot mono/multi circuit 44 includes D flip-flop 63, a resistor 64, and a capacitor 65. The one-shot mono/multi circuit 44 generates an output signal d in a predetermined duration from the rise time of the output signal c supplied from the first detecting circuit 43. The output signal d generated by the one-shot mono/multi circuit 44 is supplied to the parallel-to-serial converting circuit 47.

The second detecting circuit 45 is connected with the parallel-to-serial converting circuit 47 outputting an output signal e. The second detecting circuit 45 includes the diode 68, the resistor 69, the capacitor 70, and the buffer amplifier 71 in the same manner as the first detecting circuit. The second detecting circuit 45 includes an integrating circuit having the resistor 69 and the capacitor 70. In the integrating circuit, the time constant is configured such that the second detecting circuit 45 outputs the output signal c if the continuing transmitting time for the radio wave a supplied from the position indicator exceeds a second predetermined time of 200 S in this embodiment.

The pen-pressure detecting circuit 46 includes a resistor 73, the variable capacitor 5, an inverting amplifier 74, an AND gate 75, and a counter 76. The pen-pressure detecting circuit 46 generates an output signal f the pulse width of which can be varied according to the pressure (pen-pressure) applied to the variable capacitor 5. Specifically, the pulse width of the output signal f increases in proportion to the pressure applied to the variable capacitor 5. The output signal f is supplied to the counter 76.

A clock terminal of the counter 76 is coupled to the resonant circuit 41 via a capacitor 78. The counter 76 counts the number of waves of high frequency signals generated at the resonant circuit 41 in the pulse width duration of the output signal f that can be varied with the pen-pressure applied, and output the resulting number of waves to the parallel-to-serial converting circuit 47 as 8-bit digital values Q0 to Q7. The counter 76 outputs "0" for all the digital values Q0 to Q7 in a resetting state (when the output signal f is at the low in level), and increments one value whenever the clock is input thereafter. In addition, when the clock is input 255 times, the counter 76 outputs "1" for all the digital values Q0 to Q7, and the counter 76 will not increment the values any more thereafter.

The clock input signal terminal of the parallel-to-serial converting circuit 47 is connected with the one-shot mono/multi circuit 44, which outputs an output signal d. The parallel-to-serial converting circuit 47 sequentially outputs the signals that are converted based on the 8-bit digital values Q0 to Q7 supplied from the counter 76 for each rise time of the output signal d. The converted signals each are processed as a control signal g by allowing them to pass through an AND gate 79 while the output signal d is generated.

The control signal g is output to the switch 52 and the switch 52 is switched on and off based on the control signal g. The 8-bit data digitized from the pen-pressure are expressed as the presence or absence of signals generated by the resonant circuit of the position indicator 1 in this manner. Specifically, when the control signal g is "0", the resonant circuit 41 generates a signal, which is then detected by the position detector. Specifically, when the control signal g is "1", the resonant circuit 41 generates no signal, and thus the position detector will not detect the signal. The position detector detects the pressure applied to the variable capacitor 5 of the position indicator 1 as the pen-pressure in this manner.

The movement of the core 3 when the position indicator 1 is placed on the input plane of the position dictator with inclination will be described with reference to FIGS. 4A and 4B. FIG. 4A illustrates the position indicator 1 placed on the input plane 102a of the position detector with inclination. The position indicator 1 in FIG. 4A illustrates a state where the indicating unit 31 is yet to be pressed against the input plane 102a; while the core 3 is impelled by an impelling unit, not shown in the figure, in the direction of the opening 15.

FIG. 4B illustrates a state when the indicating unit 31 is pressed against the input plane 102a of the position detector. The indicating unit 31 is elastically deformed such that the indicating unit 31 is flexibly deflected while pressing against the input plane in pressing directions. The external force applied to the indicating unit 31 is higher in the lateral direction than in the axial direction of the core 3. When the external force is applied to the indicating unit 31 in the lateral direction, the spherical projections 37 of the core 3 are slidably moved on the case side conical plane 16 of the front-end case 11, thereby causing the core 3 to move relative to the case 2, with being against impelling force applied by the impelling unit, not shown.

Specifically, the external force F1 applied to the indicating unit 31 is divided into two components of force: a first lateral component of force F2 applied in parallel to the inclined direction, i.e. the direction defined by the guiding unit that is illustrated by the dashed line in Fig. 4B; in the embodiment considered here this is the direction defined by the inclination angle of the conical plane 16; and a second component of force F3 applied perpendicular to the inclined direction of the case side conical plane 16 provided at the front-end case 11. The core 3 is moved relative to the case 2 according to the component of force

F2 which causes a displacement of the axis L2 away from axis L1 as shown in Fig. 4B and a corresponding displacement of the end portion 33a relative to the end portion 34a (cf. Fig. 1). Despite the displacement the axis L2 remains parallel to the axis L1 due to the guiding unit 4.

Since the front-end case 11 and supporting units 32 therefor are made of a synthetic resin material exhibiting excellent slidability, and the case side conical surface 16 and spherical projections 37 are mirror-finished, the frictional resistance between the case side conical surface 16 and spherical projections 37 decreases while also decreasing the amount of the component of force F2 lost due to frictional resistance. The core 3 is thus moved relative to the case 2 with high accuracy according to the component of force F2.

Since the core 3 is moved relative to the case 2, the core is moved in the direction of the variable capacitor 5 as a whole. Thus, the pressing unit 34 of the core 3 presses the variable capacitor 5, so that the pen-pressure can be detected with high accuracy. In this case, the core 3 moves in the direction where the core diagonally (45 degrees to the axis in this embodiment) intersects with the axis, and hence the displaced distance that the core 3 has diagonally moved is very short as compared to the length in the axial direction of the core 3. Thus, the pressure applied to the variable capacitor 5 by the pressing unit 34 of the core 3 acts approximately in parallel with the axial direction of the core 3.

When the user operates the position indicator 1 orthogonal to the input plane 102a of the position detector, the core 3 is impelled to move in the axial direction of the core against impelling force applied by the impelling unit, not shown in the figure.

Thus, the pressing unit 34 of the core 3 presses the variable capacitor 5, so that the pen-pressure can be detected with high accuracy.

According to the position indicator 1 of the embodiment, eight spherical projections 37 are provided with the supporting unit 32 of the core 3; however, the number of spherical projections provided as engaging units may at least be three. In this case, three or more spherical projections 37 are provided at equal intervals on the core side conical plane 36 of the supporting unit 32. In this manner, at least one spherical projection 37 can slidably be moved on the case side conical plane 16 of the case 2 even though the position indicator 1 is operated with being inclined in any directions, and the core 3 can be guided to the side of the variable capacitor 5.

Moreover, the spherical projections 37 are provided on the core side conical plane 36 of the supporting unit 32; however, the spherical projections 37 may be provided on the case side conical plane 16 of the front-end case 11. In this case, since the spherical projections 37 illustrated as the first specific examples of the engaging units are provided with the case 2 (the front-end case 11), the core side conical plane formed on the supporting unit 32 of the core 3 corresponds to an inclined plane constituting part of the guiding unit.

Further, the spherical projections 37 are provided as the first specific examples of the engaging units, on the core side conical plane 36 of the supporting unit 1; however, projections such as cones or pyramids may be formed such that the projections are in point-contact with the case side conical plane of the case 2. In the embodiment, an engaging inclined plane that can slidably be engaged to the inclined plane may instead be utilized as the engaging units. Specifically, an engaging conical plane that can slidably be engaged with the case side conical plane 16 of the front-end case 11 may be formed on the supporting unit 32. In this case, the engaging conical plane provided on the supporting unit 32 is slidably moved in line-contact with the case side conical plane 16, and hence the core 3 is moved relative to the case 2.

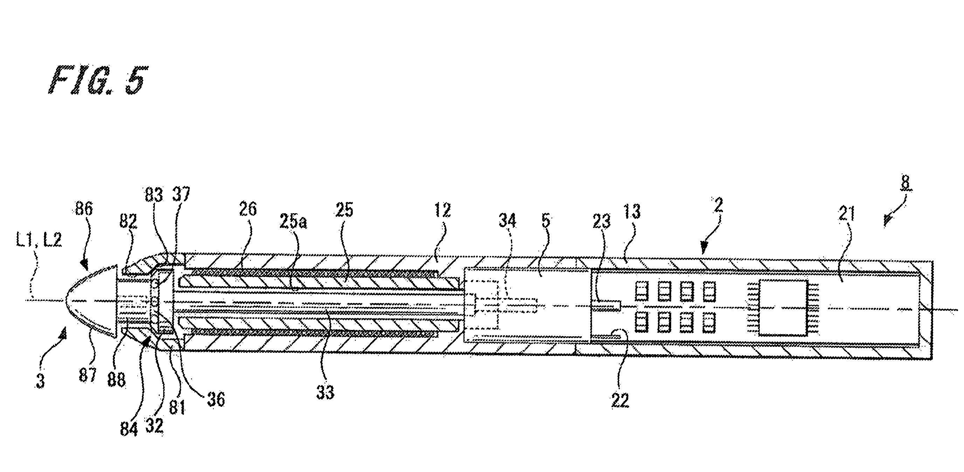

FIG. 5 illustrates a position indicator according to a second embodiment of the invention. The position indicator 8 of this embodiment is configured to indicate positions to the position detector via electromagnetic induction as in the same manner as the position indicator 1 of the first embodiment. The position indicator 8 of this embodiment differs in the front-end case 81 of the case 2 and the indicating unit 86 of the core from the position indicator 1 of the first embodiment. Thus, there will only be described the front-end case 81 and indicating unit 86 of the position indicator 8, and the duplicated description is omitted by simply assigning the same reference numerals to the common units of the position indicator 1.

The front-end case 81 has an opening 82 on the opposite side of the middle case 12, and the later-described fixing piece 88 of the indicating unit 86 passes therethrough. A case side conical plane 83 illustrating one specific example of an inclined plane is formed in the front-end case 81. This case side conical plane 83 is continuously formed from the opening 82, and is formed with an inclination so that an internal space of the front-end case 81 is gradually enlarged. According to the embodiment, an inclined angle of the case side conical plane 83 is 45 degrees to the central axis L1 of the case 2. Note that the core 3 of the position indicator 1 is located to match with the central axis L2 when not in operation.

The case side conical plane 83 of the front-end case 81 is slidably engaged with eight spherical projections 37 provided on the supporting unit 32 of the core 3. Specifically, the guiding unit 84 guiding the core 3 to the side of the variable capacitor 5 includes the case side conical plane and eight spherical projections. The case side conical plane 83 is mirror-finished by which the surface thereof is smoothly finished, thereby decreasing the friction resistance between the case side conical plane 16 and the spherical projections 37. A polyacetal resin (POM) having a small friction coefficient and exhibiting excellent slidability is employed as a material for the front-end case 81 having the case side conical plane 83, similar to that employed for the front-case 11 of the first embodiment.

The indicating unit 86 of the core 3 includes an abutting piece 87 causing to abut on the input plane of the position detector in operation, and a fixing piece 88 continuously provided from the abutting piece 87 and fixed to the supporting unit 32. The abutting piece 87 of the indicating unit 86 is formed in an approximately conical shape having a round edge thereof. A polyacetal resin (POM) or fluorocarbon resin having a small friction coefficient as well as exhibiting excellent slidability may be employed as the material for the indicating unit 86; however, other synthetic resins such as a polycarbonate (PC) and an acrylonitrile butadiene styrene resin (ABS) may also be employed as the material therefor.

When the aforementioned position indicator 8 is operated with being inclined to the input plane of the position detector, the pressure (pen-pressure) is applied to the indicating unit 86 thereof in the lateral direction. When the pen-pressure is applied to the indicating unit 86 in the lateral direction, the spherical projections 37 of the core 3 are slidably moved on the case side conical plane 83 of the front-end case 81, thereby causing the core 3 to relatively move to the case 2, with being against impelling force applied by the impelling unit, not shown. Thus, the pressing unit 34 of the core 3 presses the variable capacitor 5, so that the pen-pressure can be detected with high accuracy.

The case 2 moves in the direction inclined to the axial direction (45 degrees in this embodiment) of the core 3 relative to the core 3. However, since the distance that the core 3 moves slightly in the inclined direction relative to the length of the core in the axial direction, the pressure is applied to the variable capacitor 5 by the pressing unit 34 in the direction approximately parallel to the axial direction of the core 3.

When the user operates the position indicator 8 orthogonal to the input plane of the position detector, the core 3 is impelled to move in the axial direction of the core against impelling force applied by the impelling unit, not shown in the figure, thereby causing the pressing unit 34 to press the variable capacitor 5. Consequently, when the user operates the position indicator 8 orthogonal to the input plane of the position detector, the pen-pressure may not be detected with accuracy.

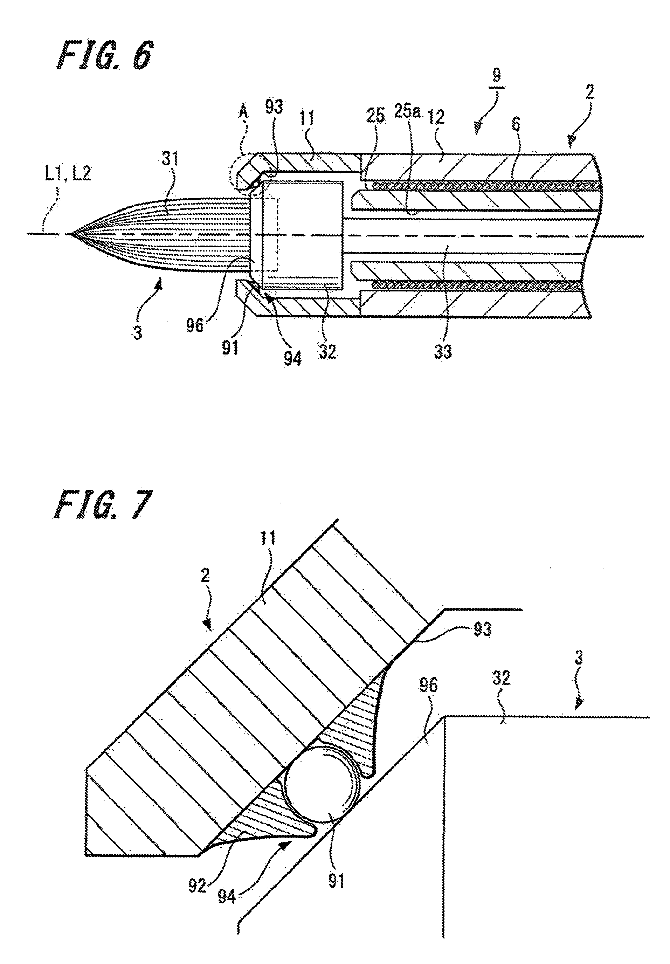

FIG. 6 illustrates a position indicator according to a third embodiment of the invention. FIG. 7 is an enlarged diagram of a portion A in FIG. 6. The position indicator 9 of this embodiment is configured to indicate positions to the position detector via electromagnetic induction as in the same manner as the position indicator 1 of the first embodiment. Specifically, the difference part of the position indicator 9 from the position indicator 1 is the guiding unit 94 that guides the core 3 to the side of the variable capacitor 5. Thus, there will only be described the guiding unit 94, and the duplicated description is omitted by simply assigning the same reference numerals to the common units of the position indicator 1.

As shown in FIGS. 6 and 7, the guiding unit 94 of the position indicator 9 includes eight spherical members 91 (only two of these are shown in FIG. 6) illustrating the second specific examples of the engaging units rotatably supported on the front-end case 11 of the case 2, and a core side conical plane 96 illustrating a specific example of the inclined plane provided on the supporting unit 32 of the core 3.

The eight spherical members 91 of the guiding unit 94 are rotatably supported by spherical member supporting units 92, respectively, which are provided on the front-end case 11. The spherical member supporting units are provided on the case side conical plane 93 formed on an inner surface of the front-end case 11. The eight spherical members 91 supported by the eight spherical member supporting units 92 are arranged at equal intervals along the case side conical plane 93 of the front-end case 11, and are in point contact with the case side conical plane 93. The inclined angle of the case side conical plane 93 to which the eight spherical members 91 are allowed to be in point contact forms 45 degrees to the central axis L1 of the case 2. Note that the core 3 of the position indicator 9 is located to match with the central axis L2 when not in operation.

It is preferable that a material for the spherical member 91 has high strength, such as ceramics or stainless steel. However, the material for the spherical member 91 is not limited thereto; and the material may be metal such as structural carbon steel or engineering plastics.

The core side conical plane 96 is formed on the side of the indicating unit 31, in the same manner as the first embodiment, and the inclined angle thereof forms 45 degrees to the central axis L2 of the core 3. In the assemble state of the position indicator 9, the spherical members 91 arranged between the case side conical plane 93 of the case 2, and are rotatably in point contact with both therewith. The case side conical plane 93 and the core side conical plane 96 are mirror-finished by which the surface thereof is smoothly finished, thereby decreasing the friction resistance between the case side conical plane 93 and the spherical members 91.

When the aforementioned position indicator 9 is operated with being inclined to the input plane of the position detector, the pressure (pen-pressure) is applied to the indicating unit 31 thereof in the lateral direction. When the pen-pressure is applied to the indicating unit 31 in the lateral direction, the spherical members 91 arranged between the case side conical plane 93 of the case 2 and the core side conical plane 96 of the core rotate, thereby causing the core 3 and the case 2 to relatively be moved, with being against impelling force applied by the impelling unit, not shown. Thus, the pressing unit 34 of the core 3 presses the variable capacitor 5, so that the pen-pressure can be detected with high accuracy.

According to the embodiment, the spherical member supporting units 92 support the eight spherical members 91; however, the spherical member supporting units 92 may only support at lease three spherical members 91. In this case, three or more spherical members 91 are provided at equal intervals on the case side conical plane 93 of the front-end case 11. In this manner, at least one spherical member 91 can rotate between the case side conical plane 93 and the core side conical plane 96 even though the position indicator 1 is inclined in any directions, and the core 3 can be guided to the side of the variable capacitor 5.

Moreover, the spherical member supporting units 92 supporting the spherical members 91 are rotatably provided on the case side conical plane 93 of the front-end case 11; however, the spherical member supporting units may be provided on the core side conical plane 96 of the supporting unit 32. In this case, since the spherical members 91 illustrated as the second specific examples of the engaging units are supported on the case 3, the case side conical plane 93 of the case 2 corresponds to an inclined plane constituting part of the guiding unit.

According to the first to third embodiments, an inclined plane forming part of the guiding unit is configured to correspond to the conical plane; however, a pyramidal plane may also be configured to correspond to the conical plane. Further, the incline plane according to the embodiment may be a plane incline to the respective central axes L1 or L2 of the case 2 or core 3. In this case, the position indicator may need be inclined in the predetermined direction so as to operate the position indicator inclined to the input plane of the position detector and guide the core 3 to the side of the variable capacitor 5. Therefore, it is preferable to provide operational buttons or print on the outer surface of the case 2, so that the user constantly operates the position indicator with inclining in the predetermined direction.

According to the first to third embodiments, the inclined angle of the case side conical plane 16, 83 and the core side inclined plane 96 each forming part of the guiding unit are configure to form 45 degrees to the central axis L2 of the core. Accordingly, the component of the force F2 can efficiently be obtained from the external force F1, as shown in FIG. 4B. However, a potential angle of the inclined plane of the embodiment is not limited to 45 degrees to the central axis L2 of the core 3; and any angles may optionally be formed. It is preferable that the angle of the inclined plane be in a range of 30 to 60 degrees to the central axis L1 of the core 3 to obtain the component of the force F2 from the external force F1 with high efficiency.

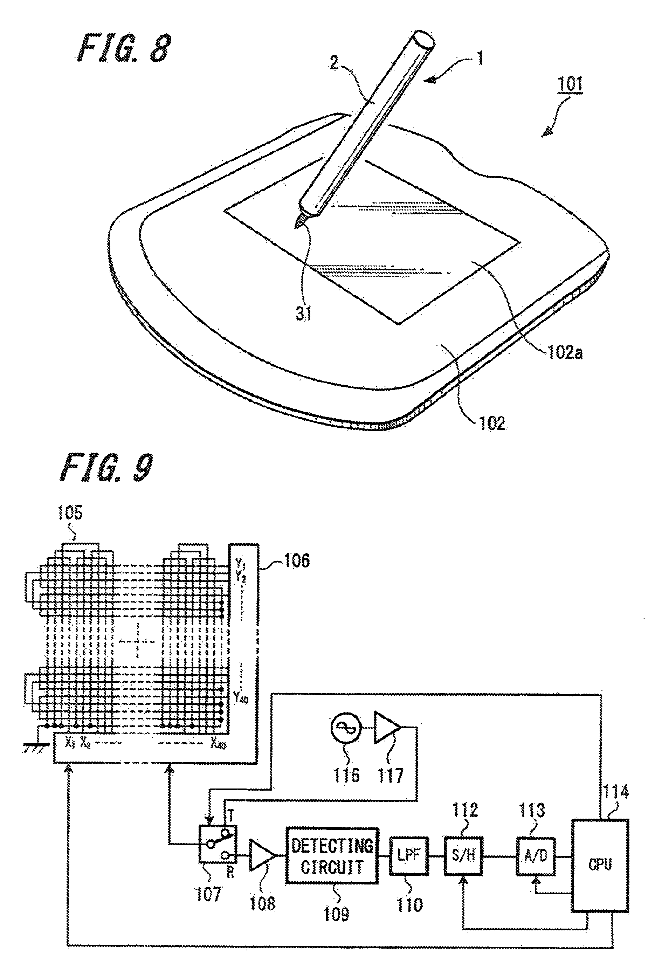

FIG. 8 is a coordinate input device with a position indicator 1 including the aforementioned configuration and functions according to a first embodiment of the invention. FIG. 9 is a block diagram illustrating a configuration of the position detector utilized with the position indicator shown in FIG. 8.

According to an embodiment of the invention, as shown in FIG. 8, a coordinate input device 101 includes a position detector 102 having an input plane 102a, and a posi tion indicator 1 indicating a position on the input plane 102a of the position detector 102. The coordinate input device 101 is utilized as an input device for an external apparatus such as a personal computer or a personal digital assistant, not shown, by connecting the position detector 102 to the external device.

The position detector 102 of the coordinate input device 101 has a flat-plate with an approximately quadrilateral shape, one surface of which is utilized as the input plane 102a, and the other surface of which is utilized as a mounting plane. An electromagnetic induction type of a position detecting unit 105 is provided for the input plane 102a of the position detector 102, as shown in FIG. 9.

The position detecting unit 105 of the position detector 102 includes 40 loop coils X₁ to X₄₀ arranged in an X-axis direction, and 40 loop coils Y₁ to Y₄₀ arranged in a Y-axis direction. The 40 loop coils X₁ to X₄₀ and 40 loop coils Y₁ to Y₄₀ are each connected to a selecting circuit 106 selecting each of the loop coils.

The selecting circuit 106 is connected to a duplexing circuit 107, and an amplifier 108 is connected to the receiving side of the duplexing circuit 107. The amplifier 108 is connected to the detecting circuit 109, which is connected to a sample-and-hold circuit 112 via a lowpass filter (LPF) 110. The sample-and-hold circuit 112 is further connected to an analog-to-digital converting circuit (AD converter) 113, to which a CPU (Central Processing Unit) 114 is connected. The CPU 114 supplies control signals to the aforementioned selecting circuit 106, the sample-and-hold circuit 112, the analog-to-digital converting circuit 113, and the duplexing circuit 107.

The position detector 102 includes an oscillator 116 generating an alternating current signal with a frequency of f0, a current driver 117 converting the alternating current signal into current. The current driver 117 is connected to the transmitting side of the duplexing circuit 107. Specifically, when the control signals supplied from the CPU 114 switches a contact point to the transmitting side of the duplexing circuit 107, the alternating current signal with a frequency of f0 is output from the loop coils X₁ to X₄₀ and loop coils Y₁ to Y₄₀ of the position detecting unit 105.

When the position indicator 1 approaches the position detecting unit 105, the position indicator 1 resonates the internal resonant circuit 41 to output a resonant signal. The position detecting unit 105 detects the position indicated by the position indicator 1 as an X-Y coordinate from the selectable positions of the loop coils X1 to X40, Y1 to Y 40 based on the resonant signal supplied from the resonant circuit 41.

More magnetic field lines in the direction to which the position indicator 1 is inclined intersect the position detecting unit 105 than those in the opposite direction the position indicator 1 inclined thereto. Accordingly, the position detecting unit 105 can detect the position indicated by the position indicator 1, and can also detect the inclination of the position indicator 1 to the input plane 102a of the position detector.

The CPU 114 of the position detector 102 can determine the inclination of the position indicator 1 detected by the position detecting unit 105, and the pen-pressure applied to the position indicator 1, based on the pen-pressure information supplied from the position indicator 1 via the position detecting unit 105. Subsequently, the CPU 114 carries out a control based on the determined pen-pressure; for example, the CPU 114 controls to change gradation of input lines according to the pen-pressure applied thereto. The CPU 114 can also carry out the control based on the pen-pressure that is supplied from the position indicator 1 as pen-pressure information.

The position indicator and coordinate input device according to embodiments of the invention, as described so far, includes the guiding unit that guides the movement of the core when external force is applied to the indicating unit in the lateral direction of the core, and hence the core can reliably be moved even though the external force is applied to the indicating unit in the lateral direction of the core. The pressure detector pressed by the core that has been moved can detect the external force as the pen-pressure with high accuracy as a result.

Further, the inclined plane of the guiding unit is formed such that the angle of the inclined plane to the central axis of the core is approximately 30 to 60 degrees, the component of force in the direction where the core is moved by the external force can efficiently be obtained when the external force is applied in the lateral direction. Thus, the external force is sensitively detected even though the external force is applied in the lateral direction.

Moreover, engaging units of the guiding unit are formed of three or more convex units that are in point contact with the inclined plane thereof, thereby decreasing the frictional resistance between the inclined plane and engaging units thereof, and decreasing the amount of the component of force F2 lost due to frictional resistance in the direction where the core is moved by the external force. Thus, the external force is sensitively detected even though the external force is applied in the lateral direction.

Further, the engaging units of the guiding unit are formed of spherical or rotational members rotatably supported on the case or the core, thereby decreasing the frictional resistance between the inclined plane and engaging units thereof, and decreasing the amount of the component of force F2 lost due to frictional resistance in the direction where the core is moved by the external force. Thus, the external force is sensitively detected even though the external force is applied in the lateral direction.

Still further, the inclined plane and engaging units of the guiding unit are made of a fluorine resin or polyacetal resin, and they are mirror-finished, thereby decreasing the frictional resistance between the inclined plane and engaging units thereof, and decreasing the amount of the component of force F2 lost due to frictional resistance in the direction where the core is moved by the external force. Thus, the external force is sensitively detected even though the external force is applied in the lateral direction.

Since the indicating unit of the core is formed of a brush or a resilient member in a shape of a calligraphy-brush, the user can input characters or graphics by operating the position indicator while having a feel of wiring similar to writing with the calligraphy-brush.

The embodiment of the coordinate input device includes a detector detecting the inclination of the position indicator to the input plane of coordinate input device, and the control unit determining the pen-pressure based on the detected inclination and pressure information supplied from the position indicator. Thus, if there is a difference between the two components of force in the direction where the core is moved by the external force under the condition where the two inclinations of the position indicator to the input plane of the position detector differ while the two applied external force are same, the two external force are detected as the same magnitude of the pen-pressure. Therefore, the user can operate the position indicator with an excellent feel of writing.

The invention is not limited to the aforementioned embodiments and the accompanied drawings, and various modifications and alterations may be made without departing from the scope of the invention. In the aforementioned embodiment, the examples of the position indicator and coordinate input device to both of which the electromagnetic inductive system is applied have been described; however, other coordinate detecting systems such as an electrostatic coupling system and pressure sensitive system and laser system may also be applied to the position indicator and coordinate input device.

It should be understood by those skilled in the art that various modifications, combinations, sub-combinations, and alterations may occur depending on design requirements and other factors insofar as they are within the scope of the appended claims.

## Claims

1. A position indicator comprising:
an enclosure (2);
a movable member (3) being connected to an indicating unit (31; 86) projecting outside of the enclosure and the movable member being movably supported within the enclosure, wherein the movable member (3) has an elongated form and
extends along a length axis of the enclosure; and
a pressure detector (5) detecting pressure applied from the movable member;
the position indicator being **characterised in that** :
it further comprises a guiding unit (4) including an inclined plane (16; 83; 96) formed on one of the
enclosure and the movable member, and an engaging unit (36; 93; 91, 92, 94) provided on the other and slidably engaged with the inclined plane such that the guiding unit guides movement of the movable member when the indicating unit is operated by being depressed inclined on an input plane, wherein the guiding unit (4) is adapted for guiding the movement of the movable member into the enclosure
and essentially along the length axis thereof; and
the pressure detector (5) is detecting pressure applied from the movable member that
Is guided and moved by the guiding unit essentially along the length axis of the enclosure.

2. A position indicator according to claim 1, wherein
the inclined plane includes an angle to the central axis of the movable member in a range of 30 to 60 degrees.

3. A position indicator according to claim 1, wherein
the inclined plane is one of a conical plane and a pyramidal plane.

4. A position indicator according to claim 1, wherein
the engaging unit includes an engaging Inclined plane (36; 83) extending in parallel with the inclined plane.

5. A position indicator according to claim 1, wherein
the engaging unit includes at least three projections (37; 91) each in point contact with the inclined plane.

6. A position indicator according to claim 5, wherein
the projections includes a spherical projection (37; 91) having a sphere being arranged to form a point contact with the inclined planes

7. A position indicator according to claim 1, wherein
the engaging unit includes a spherical or cylindrical projection (91) rotatably supported by the enclosure or the movable member.

8. A position indicator according to claim 1, wherein
the inclined plane or the engaging unit is mirror-finished.

9. A position indicator according to claim 1, wherein
the inclined plane or the engaging unit is made of a fluorine resin or a polyacetal resin.

10. A position indicator according to claim 1, wherein
the Indicating unit of the movable member is made with a brush or an elastic member in a shape of a calligraphy-brush.

11. The position indicator according to any one of the preceding claims, the movable member having an end portion (33a), the end portion (33a) being slidably engaged with an abutment (34a) in order to allow a displacement of the end portion in a direction (98) being perpendicular to the first axis.

12. A coordinate input device, comprising:
a position detector (102) having an input plane (102a); and
a position indicator (1; 9) in accordance with any one of the preceding claims, the position indicator being capable of indicating a position on the Input plane and detecting pressing force thereto.

13. A coordinate input device according to claim 12, wherein
the position detector includes a detecting unit (105) being adapted to detect an inclination of the position indicator to the input plane based on the information that more magnetic field lines In the direction to which the position indicator (1; 9) is inclined intersect the position detecting unit (105) than those In the opposite direction the position indicator (1; 9) is inclined thereto, wherein the magnetic field lines result from resonant signal supplied from a resonant circuit of the position indicator (1; 9).

## Patentansprüche

1. Positionsanzeiger, aufweisend:
ein Gehäuse (2);
ein bewegliches Element (3), das mit einer Anzeigeeinheit (31; 86) verbunden ist, die aus dem Gehäuse nach außen vorsteht, und wobei das bewegliche Element bewegliche innerhalb des Gehäuses gelagert ist, wobei das bewegliche Element (3) eine längliche Form aufweist und sich entlang einer Längsachse des Gehäuses erstreckt; und
einen Druckgeber (5), der einen Druck erfasst, welcher von dem beweglichen Element her angelegt wird,
wobei der Positionsanzeiger **dadurch gekennzeichnet ist, dass** er ferner aufweist:
eine Führungseinheit (4) die eine geneigte Ebene (18; 83; 98) aufweist und die an einem von dem Gehäuse und dem beweglichen Element ausgebildet ist, und eine Kontakteinheit (36; 93; 91, 92, 94), die am jeweils anderen ausgebildet ist und die gleitend an der geneigten Ebene anliegt, so dass die Führungseinheit die Bewegung des beweglichen Elements führt, wenn die Anzeigeeinheit dadurch betätigt wird, dass sie schräg auf einer Eingabeebene belastet wird, wobei die Führungseinheit (4) dafür ausgelegt ist, die Bewegung des beweglichen Elements in das Gehäuse hinein und im Wesentlichen entlang von dessen Längsachse zu führen; und
der Druckgeber (5) einen Druck erfasst, der von dem beweglichen Element her angelegt wird, das von der Führungseinheit im Wesentlichen entlang der Längsachse des Gehäuses geführt und bewegt wird.

2. Positionsanzeiger nach Anspruch 1, wobei
die geneigte Ebene einen Winkel zur Mittelachse des beweglichen Elements in einem Bereich von 30 bis 60 Grad aufweist.

3. Positionsanzeiger nach Anspruch 1, wobei
die geneigte Ebene eine konische Ebene oder eine pyramidale Ebene ist.

4. Positionsanzeiger nach Anspruch 1, wobei
die Kontakteinheit eine geneigte Kontaktebene (36; 93) aufweist, die sich parallel zu der geneigten Ebene erstreckt.

5. Positionsanzeiger nach Anspruch 1, wobei
die Kontakteinheit mindestens drei Vorsprünge (37; 91) aufweist, die jeweils in Punktkontakt mit der geneigten Ebene stehen.

6. Positionsanzeiger nach Anspruch 5, wobei
die Vorsprünge einen kugeligen Vorsprung (37; 91) mit einer Kugel umfassen, die so angeordnet ist, dass sie einen Punktkontakt mit der geneigten Ebene bildet.

7. Positionsanzeiger nach Anspruch 1, wobei
die Kontakteinheit einen kugeligen oder zylindrischen Vorsprung (81) aufweist, der rotationsfähig von dem Gehäuse oder dem beweglichen Element gelagert wird.

8. Positionsanzeiger nach Anspruch 1, wobei
die geneigte Ebene oder die Kontakteinheit hochglanzpoliert ist.

9. Positionsanzeiger nach Anspruch 1, wobei
die geneigte Ebene oder die Kontakteinheit aus einem Fluorharz oder einem Polyacetalharz besteht.

10. Positionsanzeiger nach Anspruch 1, wobei
die Anzeigeeinheit des beweglichen Elements aus einem Pinsel oder einem elastischen Element in Form eines Kalligraphiepinsels besteht.

11. Positionsanzeiger nach einem der vorangehenden Ansprüche, wobei
das bewegliche Element einen Endabschnitt (33a) aufweist, wobei der Endabschnitt (33a) gleitend an einem Anschlag (34a) anliegt, um eine Verlagerung des Endabschnitts in einer Richtung (95) zuzulassen, die senkrecht ist zur ersten Achse.

12. Koordinateneingabevorrichtung, aufweisend:
einen Positionsgeber (102) mit einer Eingabeebene (102a); und
einen Positionsanzeiger (1; 9) gemäß einem der vorangehenden Ansprüche, wobei der Positionsanzeiger in der Lage ist, eine Position auf der Eingabeebene anzuzeigen und eine daran angelegte Druckkraft zu erfassen.

13. Koordinateneingabevorrichtung nach Anspruch 12, wobei
der Positionsgeber eine Erfassungseinheit (105) aufweist, die dafür ausgelegt ist, eine Neigung des Positionsanzeigers zur Eingabeebene aufgrund der Information zu erfassen, dass mehr Magnetfeldlinien in der Richtung, in welcher der Positionsanzeiger (1; 9) geneigt ist, als solche in der entgegengesetzten Richtung zu der, in welcher der Positionsanzeiger (1; 9) geneigt ist, die Positionserfassungseinheit (105) schneiden, wobei die Magnetfeldlinien aus einem Resonanzsignal stammen, das von einem Schwingkreis des Positionsanzeigers (1; 9) ausgegeben wird.

## Revendications

1. Indicateur de position comprenant :
une enceinte (2) ;
un élément mobile (3) relié à une unité d'indication (31 ; 86) faisant saillie hors de l'enceinte, et l'élément mobile étant supporté de façon déplaçable à l'intérieur de l'enceinte, dans lequel l'élément mobile (3) présente une forme allongée et s'étend le long d'un axe longitudinal de l'enceinte , et
un détecteur de position (5) détectant une pression appliquée depuis l'élément mobile ;
l'indicateur de position étant **caractérisé en ce que** :
il comprend en outre une unité de guidage (4) incluant un plan incliné (18 ; 83 ; 96) formé sur l'un parmi l'enceinte et l'élément mobile, et une unité d'engagement (36 ; 93 ; 91, 92, 94) prévue sur l'autre et engagée de façon coulissante avec le plan incliné, de sorte que l'unité de guidage guide le déplacement de l'élément mobile lorsque l'unité d'indication est opérée en étant inclinée vers le bas sur un plan d'entrée, dans lequel l'unité de guidage (4) est adaptée pour guider le déplacement de l'élément mobile à l'intérieur de l'enceinte et essentiellement le long de l'axe longitudinal de celle-ci ; et
le détecteur de position (5) détecte la pression appliquée depuis l'élément mobile guidé et déplacé par l'unité de guidage essentiellement le long de l'axe longitudinal de l'enceinte.

2. Indicateur de position selon la revendication 1, dans lequel
le plan incliné comprend un angle par rapport à l'axe central de l'élément mobile dans une plage de 30 à 60 degrés.

3. Indicateur de position selon la revendication 1, dans lequel le plan incliné est l'un parmi un plan conique et un plan pyramidal.

4. Indicateur de position selon la revendication 1, dans lequel
l'unité d'engagement comprend un plan incliné d'engagement (36 ; 93) s'étendant parallèlement au plan incliné.

5. Indicateur de position selon la revendication 1, dans lequel
l'unité d'engagement comprend au moins trois saillies (37 ; 91), chacune en contact ponctuel avec la plan incliné.

6. Indicateur de position selon la revendication 5, dans lequel
les saillies comprennent une saillie sphérique (37 ; 91) comportant une sphère arrangée pour former un contact ponctuel avec le plan incliné.

7. Indicateur de position selon la revendication 1, dans lequel
l'unité d'engagement comprend une saillie sphérique ou cylindrique (91) supportée de façon rotative par l'enceinte ou l'élément mobile.

8. indicateur de position selon la revendication 1, dans lequel le plan incliné ou l'unité d'engagement présente une finition miroir.

9. Indicateur de position selon la revendication 1, dans lequel
le plan incliné ou l'unité d'engagement est constitué(e) d'une résine fluorée ou d'une résine polyacétalique.

10. Indicateur de position selon la revendication 1, dans lequel
l'unité d'indication de l'élément mobile est conçue avec un pinceau ou un élément élastique sous la forme d'un pinceau de calligraphie.

11. Indicateur de position selon l'une quelconque des revendications précédentes, l'élément mobile possédant une partie terminale (33a), la partie terminale (33a) étant engagée de façon coulissante avec une butée (34a) afin de permettre un déplacement de la partie terminale dans une direction (98) perpendiculaire au premier axe.

12. Dispositif d'entrée de coordonnées, comprenant :
un détecteur de position (102) comportant un plan d'entrée (102a) ; et
un indicateur de position (1 ; 9) selon l'une quelconque des revendications précédentes, l'indicateur de position étant capable d'indiquer une position sur le plan d'entrée et de détecter la force de pression sur celui-ci.

13. Dispositif d'entrée de coordonnées selon la revendication 12, dans lequel
le détecteur de position comprend une unité de détection (105) adaptée pour détecter une inclinaison de l'indicateur de position vers le plan d'entrée, sur la base des informations selon laquelle un plus grand nombre de lignes de champ magnétique croise l'unité de détection de position (105) dans la direction vers laquelle l'indicateur de position (1 ; 9) est incliné que dans la direction opposée à l'inclinaison de l'indicateur de position (1 ; 9), les lignes de champ magnétique résultant du signal de résonance fourni par un circuit de résonance de l'indicateur de position (1 ; 9).
